# FASCICULE DE BREVET EUROPEEN

(11) **EP 0 657 951 B1**
(45) Date de publication et mention de la délivrance du brevet: **11.06.1997**
(21) Numéro de dépôt: 94402564.2
(22) Date de dépôt: 14.11.1994
(51) Int. Cl.: H01M 6/18, H01M 6/10

(54) **Procédé de fabrication d'un ensemble électrochimique multicouche comprenant un électrolyte entre deux électrodes et ensemble ainsi réalisé**
Verfahren zur Herstellung von mehrschichtiger elektrochemischer Bauelemente, die zwischen zwei Elektroden ein Elektrolyt enthalten und auf dieser Weise hergestellte Bauelemente
Method for manufacturing an electrochemical multilayered assembly comprising an electrolyte between two electrodes and assembly produced therefrom

(30) Priorité: 16.11.1993 FR 9313635
(43) Date de publication de la demande: 14.06.1995
(73) Titulaire: BOLLORE TECHNOLOGIES, F-29000 Quimper (FR)
(72) Inventeur: Gueguen, Michel, F-29170 Fouesnant (FR); Billion, Marc, F-56520 Guidel Plage (FR); Majastre, Hervé, F-29000 Quimper (FR)
(74) Mandataire: Martin, Jean-Jacques

(56) Documents cités:
- EP-A- 0 145 498

## Description

La présente invention concerne le domaine de la fabrication des ensembles électrochimiques multicouches comprenant un électrolyte encadré par deux électrodes.

La présente invention trouve notamment application dans la réalisation d'ensembles accumulateurs d'énergie électrique, en particulier de générateurs tels que des batteries rechargeables, ou des piles non rechargeables, ou encore des supercondensateurs.

Plus précisément, la présente invention concerne le domaine des ensembles électrochimiques comprenant un électrolyte polymère conducteur ionique.

Ces ensembles électrochimiques ont donné lieu à de vastes recherches et à une littérature abondante.

De nombreux documents se rapportent à la préparation des constituants principaux de ces ensembles. Le document FR-A-2616971 par exemple décrit la préparation d'une anode en lithium ou alliage lithié par laminage, tandis que les documents EP-A-0285476 et EP-A-0357859 décrivent la préparation d'une telle anode par dépôt en phase fondue. Les documents FR-A-2442512, FR-A-2523769, FR-A-2542322, FR-A-2557735, FR-A-2606216 et US-A-4620944 décrivent diverses formulations de l'électrolyte. Le document FR-A-2563382 décrit diverses formulations de matériaux de cathode à base de V₂ O₅ et d'oxydes et sulfures métalliques.

D'autres documents se rapportent à la technologie de fabrication de ces ensembles. La plupart de ces documents, voire par exemple FR-A-2616969 et FR-A-2616970, proposent une préparation par étapes de chaque couche composant l'ensemble électrochimique, faisant appel à des voies solvant, avec réticulation finale éventuelle. Le document EP-A-0145498 envisage de réaliser l'électrolyte polymère par extrusion ou coextrusion sur un autre composant de l'ensemble.

Malgré ces recherches et cette littérature, aucun ensemble industriel n'est encore disponible de nos jours.

La présente invention a par conséquent pour but de perfectionner les concepts théoriques jusqu'ici proposés, pour permettre une exploitation industrielle des ensembles multicouches à électrolyte polymérique.

Ce but est atteint dans le cadre de la présente invention grâce à un procédé qui comprend les étapes consistant à :
- extruder un élément comprenant un film d'électrolyte à base de polymère conducteur ionique et au moins un film d'électrode, dans une filière conformée de telle sorte que l'électrode soit accessible sur au moins une face principale de l'élément extrudé et au plus sur une tranche de cet élément,
- enrouler un complexe à base de l'élément extrudé précité, comprenant la couche d'électrolyte et deux électrodes disposées respectivement de part et d'autre de l'électrolyte, telles qu'une cathode et une anode, sous forme d'une structure présentant sur des faces différentes de ses tranches, des prises de contact électrique respectivement avec les deux électrodes, et
- opérer une métallisation sur ces faces de la tranche de la structure.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1 à 8 représentent des vues en coupe transversale de différents éléments obtenus par co-extrusion, en vue de la réalisation d'un ensemble électrochimique multicouche conforme à la présente invention,
- la figure 9 illustre schématiquement la composition d'un ensemble électrochimique multicouche conforme à la présente invention,
- la figure 10 représente schématiquement un ensemble électrochimique conforme à la présente invention,
- les figures 11, 12, 13, 14, 15, 16 et 17 illustrent des vues partielles en coupe transversale des éléments composants diverses variantes d'un ensemble électrochimique conforme à la présente invention,
- les figures 18A et 18B représentent deux étapes intermédiaires de fabrication d'un ensemble conforme à un premier exemple de l'invention,
- les figures 19A, 19B et 19C représentent trois étapes intermédiaires de fabrication d'un ensemble conforme à un second exemple de l'invention,
- la figure 20 représente une étape intermédiaire de fabrication d'un ensemble conforme à un troisième exemple de l'invention,
- les figures 21A et 21B représentent deux étapes intermédiaires de fabrication d'un ensemble conforme à un quatrième exemple de l'invention,
- la figure 22 représente une étape intermédiaire de fabrication d'un ensemble conforme à un cinquième exemple de l'invention,
- les figures 23 et 24 illustrent schématiquement deux étapes principales d'une variante de mise en oeuvre conforme à l'invention, et
- la figure 25 représente une vue schématique en coupe d'un ensemble obtenu à la sortie d'une filière d'extrusion d'électrolyte sur une électrode, dans le cadre de la variante illustrée sur les figures 23 et 24.

Comme indiqué précédemment, le procédé conforme à la présente invention consiste essentiellement à :
- extruder un élément comprenant un film d'électrolyte à base de polymère conducteur ionique et au moins un film d'électrode,
- enrouler un complexe à base de l'élément extrudé précité, comprenant la couche d'électrolyte et deux électrodes disposées respectivement de part et d'autre de l'électrolyte, telles qu'une cathode et une anode, sous forme d'une structure présentant sur des faces différentes de ses tranches, des prises de contact électrique respectivement avec les deux électrodes, et
- opérer une métallisation sur ces faces de la tranche de la structure.

On va maintenant préciser chacune de ces étapes du procédé.

L'étape d'extrusion peut consister en une bi-extrusion d'un film d'électrode sur un film d'électrolyte ou en une triextrusion de deux films d'électrodes sur un film d'électrolyte. Il s'agit de préférence d'une co-extrusion d'au moins un film d'électrode sur le film d'électrolyte.

Dans le cadre de la présente invention, le film d'électrolyte en polymère conducteur ionique comprend de préférence une couche en matériau polymère associé à un sel de lithium. Le sel de lithium peut être associé au matériau polymère par mélange ou par greffage. Il est de préférence mélangé à une cire agissant en tant qu'agent glissant, agent retardant l'inflammation, agent de dispersion de charges et/ou agent facilitant l'extrusion. Cette cire doit être inerte électro-chimiquement vis à vis des autres constituants de l'ensemble. Le film d'électrolyte comprend ainsi de préférence quelques % en masse de cire. Il peut s'agir par exemple d'une cire choisie dans le groupe des polyoléfines, telles que un terpolymère propylène-éthylène amorphe ou un polyéthylène à très faible viscosité, ou encore un amide.

Cette cire est considérée comme très préférentielle. Cependant on peut envisager de réaliser des exemples dépourvus de celle-ci.

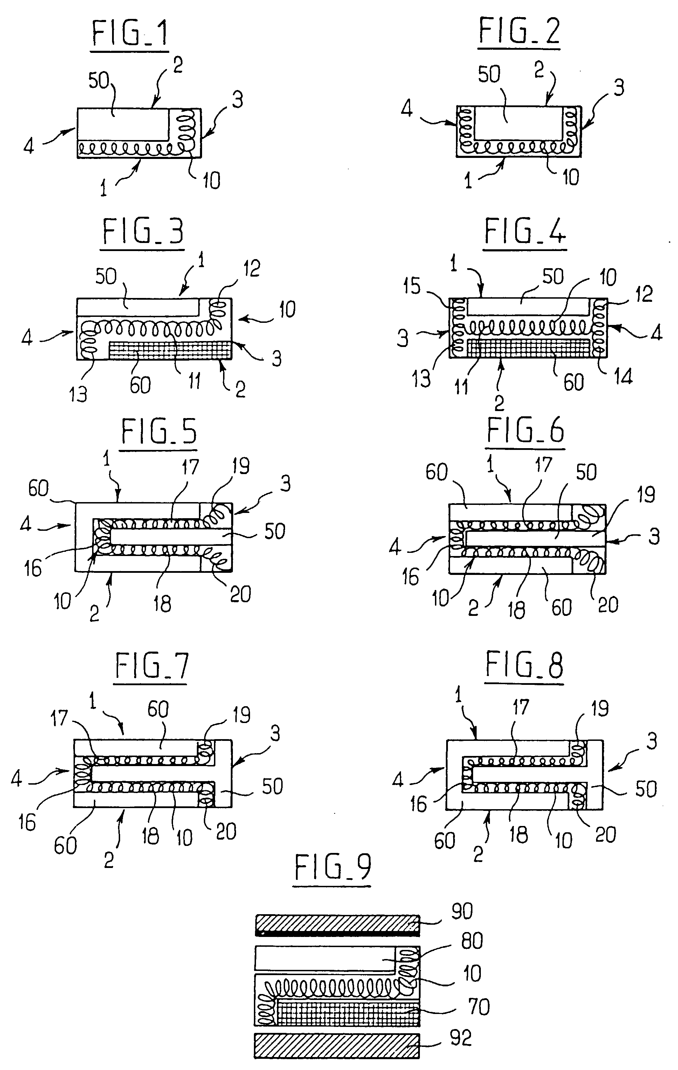

On a représenté sur les figures 1 et 2 annexées, deux configurations obtenues par bi-extrusion d'un film d'électrolyte et d'un film d'électrode, anode ou cathode, adjacente.

On a représenté sur les figures 3 à 8 annexées, six configurations obtenues par tri-extrusion du film d'électrolyte entre respectivement un film d'anode et un film de cathode.

Selon toutes les variantes représentées sur les figures 1 à 8, la feuille obtenue à la fin du processus d'extrusion présente une épaisseur constante sur toute sa largeur. Les deux faces principales de cette feuille sont référencées 1 et 2. Ses tranches latérales sont référencées 3 et 4.

Plus précisément l'étape de co-extrusion du film d'électrolyte et d'au moins un film d'électrode est réalisée à travers une filière conformée de telle sorte que l'électrode soit accessible sur au moins une face principale de l'élément extrudé et au plus sur une tranche de cet élément.

Selon la configuration de la figure 1, l'électrolyte 10 présente un profil en L. Plus précisément, l'électrolyte 10 couvre totalement une face principale 1 de la feuille et totalement l'une des deux tranches 3 de celle-ci. L'électrode 50 co-extrudée, peut être une anode ou une cathode. Elle est accessible sur une partie de la seconde face principale 2 et sur une partie de la seconde tranche 4 de la feuille.

Selon la configuration de la figure 2, l'électrolyte 10 présente un profil en U. Plus précisément, l'électrolyte 10 couvre totalement une face principale 1 de la feuille et totalement les deux tranches 3 et 4 de celle-ci. L'électrode 50 co-extrudée peut être une anode ou une cathode. Elle est accessible sur une partie de la seconde face principale 2.

Selon la configuration de la figure 3, l'électrolyte 10 comprend une âme interne 11 qui s'étend sur toute la largeur de la feuille extrudée et possède à ses extrémités respectives des prolongements 12, 13 qui couvrent une partie des tranches respectives 3, 4 et débouchent respectivement sur les faces principales 1, 2. Les couches d'anode et cathode 50, 60 sont disposées respectivement de part et d'autre de l'âme interne 11 et sont accessibles respectivement sur une partie de la première et de la seconde faces principales 1 et 2, ainsi que sur une partie des tranches 3 et 4.

Selon la configuration de la figure 4, l'électrolyte présente un profil en H. Plus précisément, l'électrolyte 10 comprend une âme interne 11 qui s'étend sur toute la largeur de la feuille extrudée et possède à ses extrémités respectives des prolongements 12, 13, 14, 15 qui couvrent intégralement les tranches respectives 3, 4 et débouchent sur chacune des faces principales 2, 1. Les couches d'anode et cathode 50, 60 sont disposées respectivement de part et d'autre de l'âme interne 11 et sont accessibles respectivement sur une partie de la première et de la seconde faces principales 1 et 2.

Selon la configuration de la figure 5, l'électrolyte 10 présente un profil général en U. Plus précisément, l'électrolyte 10 comprend une âme 16 qui s'étend perpendiculairement aux faces principales 1, 2 et deux branches 17, 18 parallèles entre elles et parallèles aux faces principales 1, 2. L'âme 16 est ainsi parallèle à la tranche 4. Elle est en outre proche mais distante de celle-ci. De même, les deux branches 17 et 18 sont distantes respectivement des faces principales 1, 2. Les extrémités libres des branches 17, 18 opposées à l'âme 16 sont accessibles sur la seconde tranche 3. En outre, les extrémités libres des branches 17, 18 sont munies de prolongements 19, 20 vers l'extérieur accessibles à la fois sur la tranche 3 et respectivement sur les faces principales 1, 2. L'une 50 des deux électrodes, anode ou cathode est placée à l'intérieur du volume délimité par les deux branches 17, 18. Elle est par conséquent accessible sur la tranche 3. L'autre électrode 60 est placée sur l'extérieur des branches 17, 18 et de l'âme 16. Elle est accessible à la fois sur les faces principales 1, 2 et sur la tranche 4.

Selon la configuration de la figure 6, l'électrolyte 10 présente un profil en U similaire à la figure 5. La seule différence entre la figure 6 et la figure 5, réside dans le fait selon la figure 6 l'âme 16 débouche sur la tranche 4. Par conséquent, la seconde électrode 60 est formée de deux éléments séparés accessibles respectivement sur les faces principales 1, 2.

Selon la configuration de la figure 7, l'électrolyte 10 présente un profil en U similaire aux figures 5 et 6. La seule différence entre la figure 7 et la figure 6 réside dans le fait que selon la figure 7 les prolongements 19, 20 prévus sur les branches 17, 18 de l'électrolyte ne débouchent pas sur la tranche 3. Ces prolongements 19, 20 débouchent uniquement sur les faces principales 1, 2. En conséquence, la première électrode 50 prévue entre les branches 17, 18 est accessible sur la totalité de la tranche 3 ainsi que sur une partie adjacente des faces principales 1, 2. La seconde électrode 60 reste formée de deux éléments séparés accessibles respectivement sur les faces principales 1, 2.

Selon la configuration de la figure 8, l'électrolyte 10 présente un profil en U, comparable aux figures 5, 6 et 7. La seule différence entre la figure 8 et la figure 5 réside dans le fait que selon la figure 8, les prolongements 19, 20 prévus sur les branches 17, 18 de l'électrolyte ne débouchent pas sur la tranche 3. Ces prolongements 19, 20 débouchent uniquement sur les faces principales 1, 2. En conséquence, la première électrode 50 prévue entre les branches 17, 18 est accessible sur la totalité de la tranche 3 ainsi que sur une partie adjacente des faces principales 1, 2. L'autre électrode 60 est placée sur l'extérieur des branches 17, 18 et de l'âme 16. Elle est accessible à la fois sur les faces principales 1, 2 et sur la tranche 4.

Il faut noter que de préférence les éléments extrudés représentés sur les figures 1 à 4 sont utilisés avec des séparateurs isolants électriquement, par exemple à base de film plastique nu ou de film métallisé dont la métallisation est placée côté électrode, tandis que les éléments extrudés représentés sur les figures 5 à 8 ne nécessitent pas l'utilisation de tels séparateurs isolants électriquement. Cependant les éléments extrudés représentés sur les figures 5 à 8 peuvent être séparés par des films conducteurs.

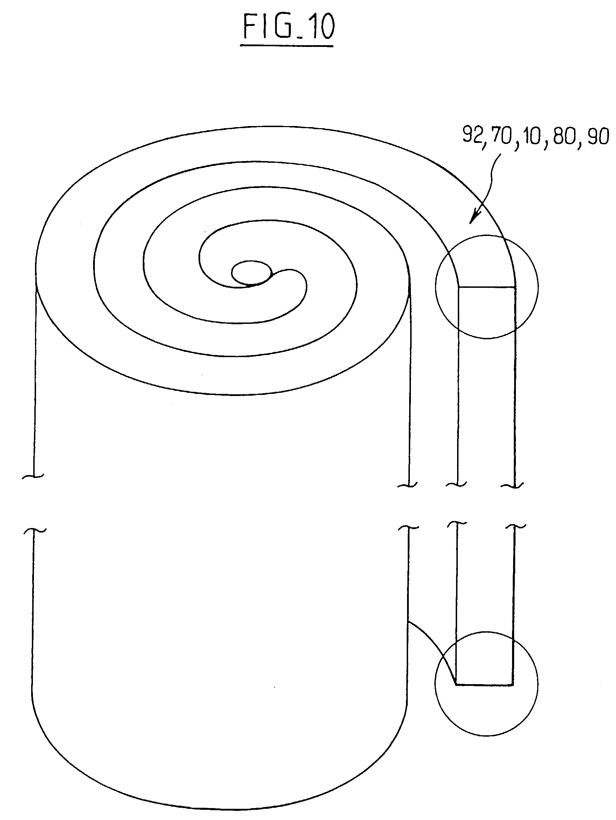

On a schématisé sur la figure 9, la structure des ensembles électrochimiques que l'on cherche à obtenir dans le cadre de l'invention.

On aperçoit sur cette figure 9, un film d'électrolyte polymère conducteur ionique 10 pris en sandwich entre deux électrodes, par exemple une anode 70, de préférence à base de lithium, et une cathode 80 formée de préférence en matériau composite. La cathode 80 est elle-même en contact avec une feuille de métal 90 ou la métallisation d'un film métallisé. L'anode 70 peut être en contact de façon similaire avec une feuille de métal ou un film métallisé. Toutefois, grâce aux bonnes propriétés de conduction de l'anode 70, celle-ci peut être placée simplement au contact d'un film non conducteur 92.

Dans le cadre de l'invention, l'épaisseur totale de la structure multicouche 92, 70, 10, 80, 90 est de préférence comprise entre 100 et 500µm.

Cette structure peut être obtenue selon de nombreux processus d'assemblage parmi lesquels on peut citer les quatre processus suivants :
a)
   - extrusion de la cathode 80 sur le film support métallisé 90, puis extrusion de l'électrolyte 10 sur cet ensemble 80, 90,
   - extrusion de l'anode en lithium 70 sur le film support 92,
   - calandrage des deux complexes précédemment obtenus,
b) co-extrusion de la cathode 80 et de l'électrolyte 10 sur le film support métallisé 90,
   - extrusion de l'anode en lithium 70 sur le film support 92,
   - calandrage des deux complexes précédemment obtenus,
c) extrusion de la cathode 80 sur le film support métallisé 90,
   - co-extrusion de l'anode en lithium 70 et de l'électrolyte 10 sur le film support 92,
   - calandrage des deux complexes précédemment obtenus,
d) co-extrusion de la cathode en matériau composite 80, de l'électrolyte 10 et de l'anode en lithium 70 sur le film support métallisé 90 ou sur le film support 92,
   - calandrage de cet ensemble sur un film support 92 ou un film support métallisé 90.

Le calandrage de la structure finale, lorsque celui-ci est prévu, est réalisé de préférence à froid. Cette disposition permet un laminage facile de l'anode en lithium 70.

Comme indiqué précédemment, dans le cadre de l'invention, l'étape d'assemblage consiste à enrouler sur lui-même un complexe à base de l'élément extrudé, comprenant la couche d'électrolyte et deux électrodes, telles qu'une cathode et une anode, ainsi que de préférence des feuilles de métal ou des feuilles plastiques métallisées, tel que représenté sur la figure 10.

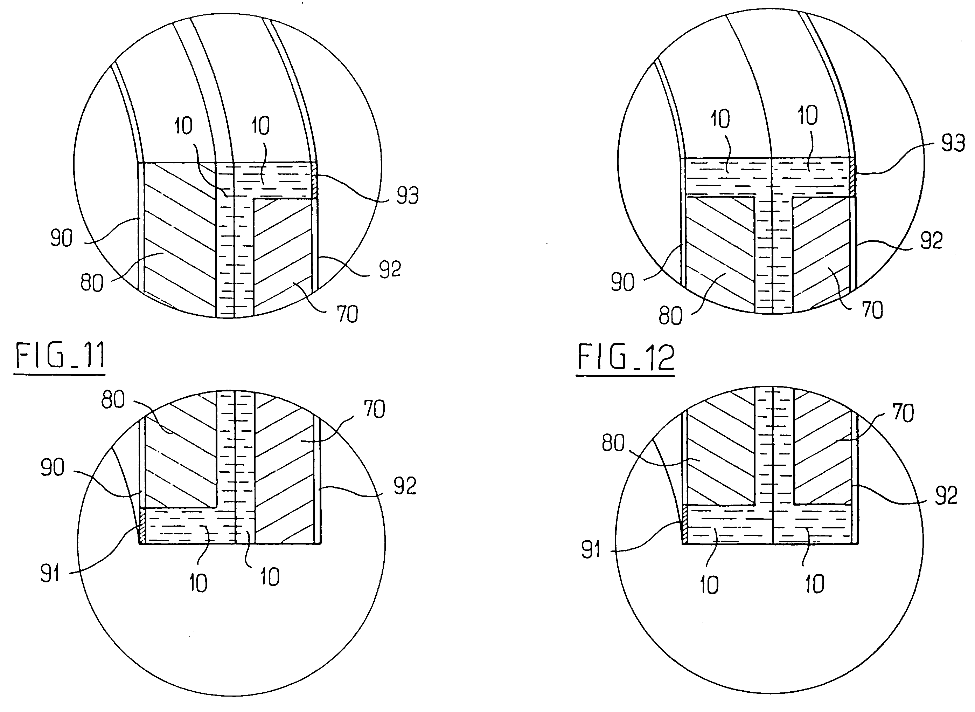

On va maintenant décrire les diverses variantes d'ensembles électrochimiques obtenus par enroulement représentées sur les figures 11 à 17.

L'ensemble représenté sur la figure 11 est obtenu par assemblage de deux complexes extrudés répondant au profil de la figure 1. Les électrolytes 10 des deux complexes sont adossés de sorte que l'anode 70 et la cathode 80 soient accessibles sur des tranches opposées de l'enroulement. Un film métallisé 92, 90 est déposé sur l'extérieur respectivement de l'anode 70 et de la cathode 80. Le film métallisé 92, 90 recouvre intégralement respectivement l'anode 70 et la cathode 80. Il est prolongé en regard de l'électrolyte 10 par une bande marginale de film électriquement isolant 93, 91.

L'ensemble représenté sur la figure 12 est obtenu par assemblage de deux complexes extrudés répondant au profil de la figure 2. Les électrolytes 10 des deux complexes sont adossés de sorte que l'anode 70 et la cathode 80 soient placées sur des faces opposées de l'enroulement. Un film métallisé 92, 90 est déposé sur l'extérieur respectivement de l'anode 70 et de la cathode 80. Le film métallisé 92, 90 recouvre intégralement respectivement l'anode 70 et la cathode 80 ainsi que l'une des zones marginales des électrolytes respectivement adjacentes à des tranches opposées. Il est prolongé en regard de l'autre zone marginale de l'électrolyte 10 par une bande de film électriquement isolant 93, 91. Ainsi si la bande marginale électriquement isolante 93 est adjacente à l'une des tranches de l'enroulement, la bande marginale électriquement isolante 91 est adjacente à l'autre tranche.

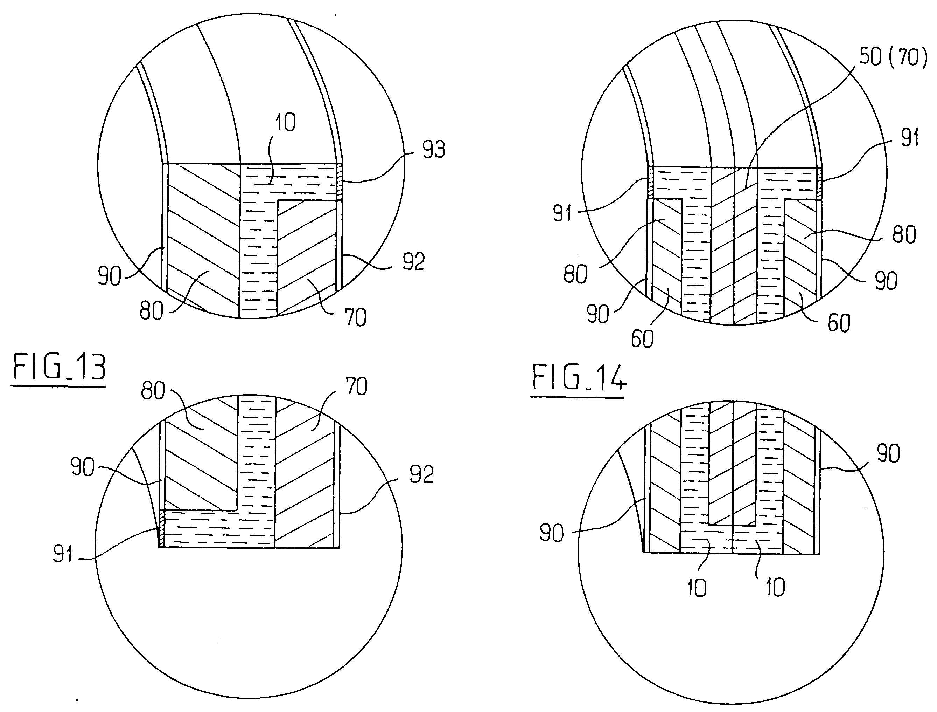

L'ensemble représenté sur la figure 13 est obtenu à l'aide d'un complexe extrudé répondant au profil de la figure 3. Un film métallisé 92, 90 est déposé sur l'extérieur respectivement de l'anode 70 et de la cathode 80. Le film métallisé 92, 90 recouvre intégralement respectivement l'anode 70 et la cathode 80. Il est prolongé en regard de l'électrolyte 10 par une bande marginale de film électriquement isolant 93, 91.

L'ensemble représenté sur la figure 14 est obtenu par assemblage de deux complexes extrudés répondant au profil de la figure 3. L'une des électrodes 50 d'un premier complexe est placé en contact de l'électrode 50 de même nature du second complexe de sorte que l'anode 70 et la cathode 80 soient accessibles sur des tranches opposées de l'enroulement. Un film métallisé 92, 90 est déposé sur l'extérieur de la seconde électrode. Le film métallisé 92, 90 recouvre intégralement cette seconde électrode. Il est prolongé en regard de l'électrolyte 10 par une bande marginale de film électriquement isolant 93, 91.

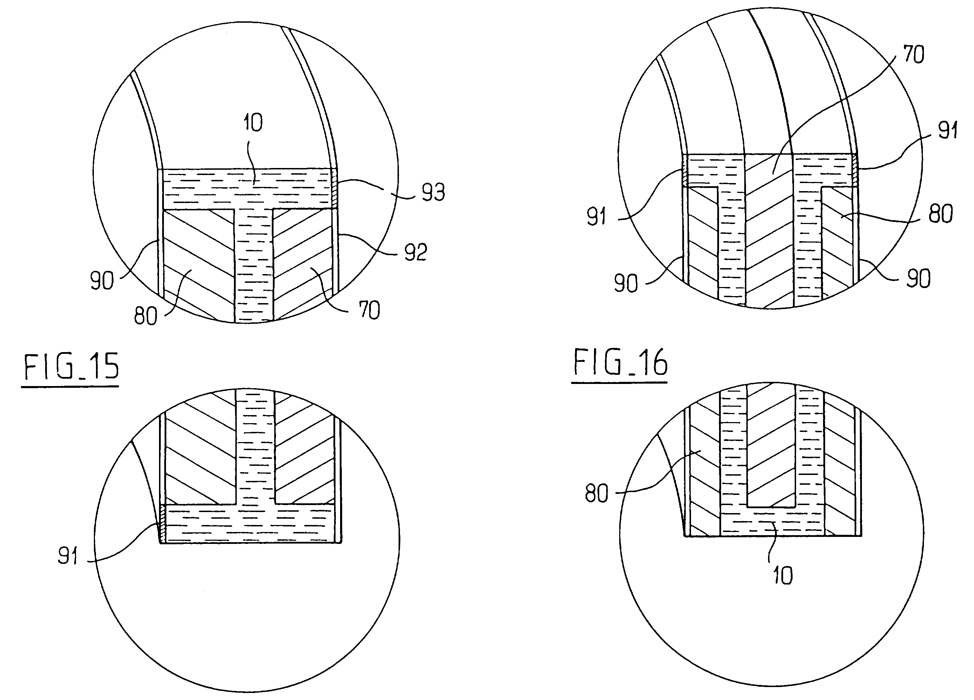

L'ensemble représenté sur la figure 15 est obtenu à l'aide d'un complexe extrudé répondant au profil de la figure 4. Un film métallisé 92, 90 est déposé sur l'extérieur respectivement de l'anode 70 et de la cathode 80. Le film métallisé 92, 90 recouvre intégralement respectivement l'anode 70 et la cathode 80. Il est prolongé en regard de l'électrolyte 10 par une bande marginale de film électriquement isolant 93, 91.

L'ensemble représenté sur la figure 16 est obtenu à l'aide d'un complexe extrudé répondant au profil de la figure 6. Deux films métallisés 92, 90 sont déposés respectivement sur l'électrode extérieure. Les films métallisés 92, 90 recouvrent intégralement l'électrode extérieure. Ils sont prolongés en regard de l'électrolyte 10 par une bande marginale de film électriquement isolant 93, 91.

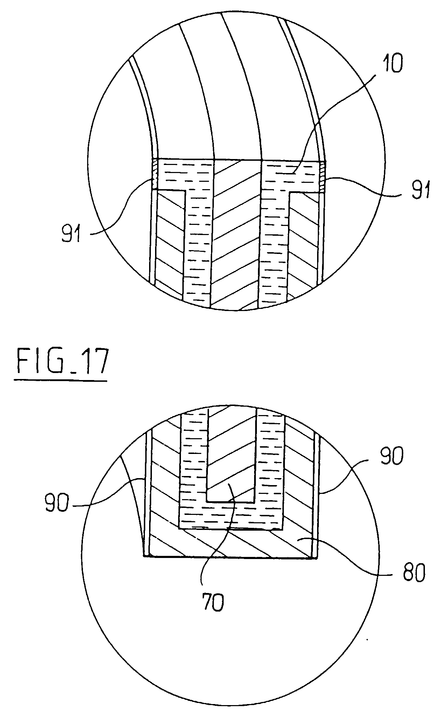

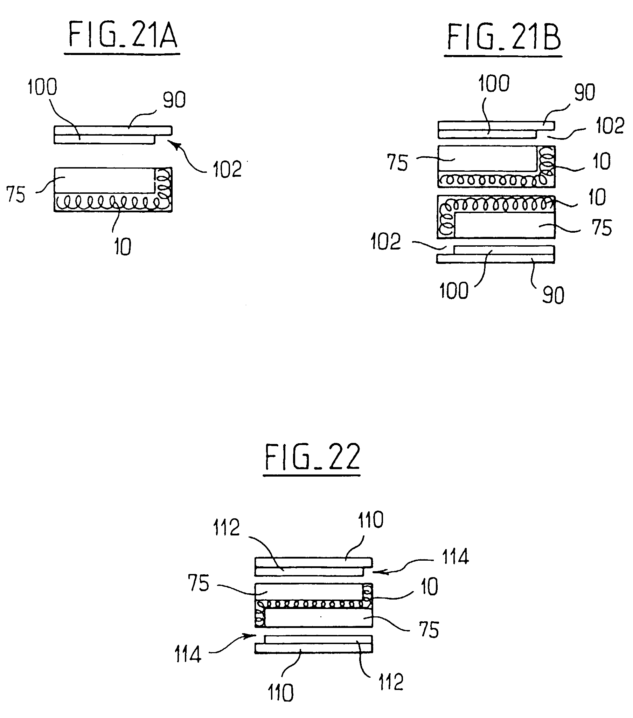

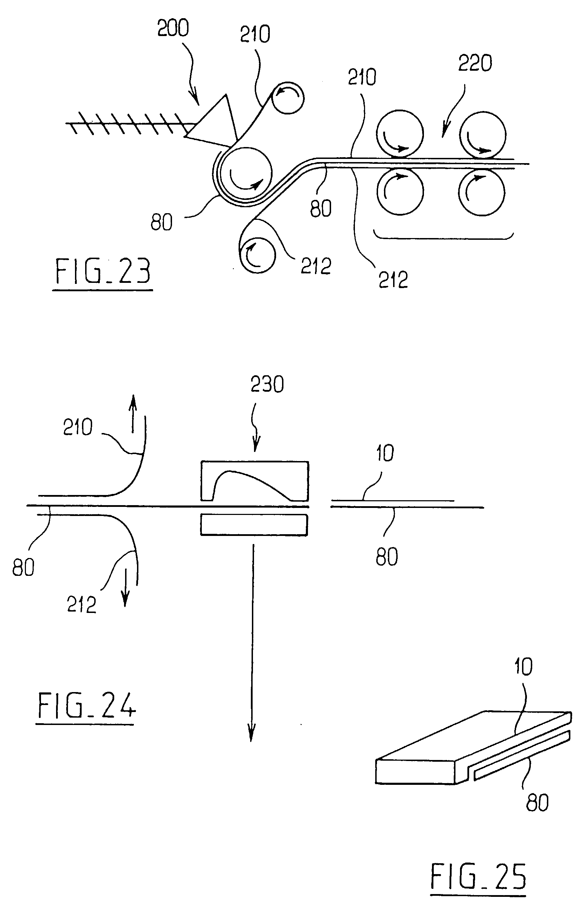

L'ensemble représenté sur la figure 17 est obtenu à l'aide d'un complexe extrudé répondant au profil de la figure 5. Deux films métallisés 92, 90 sont déposés respectivement sur l'électrode extérieure. Les films métallisés 92, 90 recouvrent intégralement l'électrode extérieure. Ils sont prolongés en regard de l'électrolyte 10 par une bande marginale de film électriquement isolant 93, 91.

Si nécessaire les éléments unitaires cylindriques obtenus par enroulement peuvent être écrasés et assimilés à des galettes.

Les connexions électriques sont réalisées au niveau des tranches des enroulements par dépôt en phase fondue de métal ou d'alliage à faible point de fusion et à bonne conductivité électrique. Il peut s'agir d'un dépot avec pistolet électrique.

Les films métallisés 90 sont de préférence des films en polypropylène d'une épaisseur de 15 à 25 µm métallisés au nickel d'une épaisseur de 20 à 100 nm par dépôt par évaporation par effet Joule ou par canon à électrons.

les films simples 92 sont quant à eux de préférence des films en polypropylène d'une épaisseur de 15 à 25 µm.

L'électrode de lithium peut être réalisée par calandrage à froid, enduction de la phase liquide de lithium ou dépôt sous vide.

On va maintenant décrire différents exemples de réalisation particuliers et non limitatifs d'ensembles électrochimiques conformes à la présente invention.

### Exemple 1

Ce premier exemple consiste tout d'abord à co-extruder l'électrolyte 10 et la cathode 80 suivant le profil conforme à la figure 1 avec les compositions suivantes :

| Composition cathode : | |
|---|---|
| MnO₂ | 75% en masse |
| C amorphe | 7% en masse |
| Polyoxyde d'éthylène | 9% en masse |
| Polyéthylène glycol | 6% en masse |
| LICF₃SO₃ | 3% en masse |

| Composition Electrolyte | |
|---|---|
| Polyoxyde d'éthylène | 85% en masse |
| Cire de polyoléfine | 5% en masse |
| LICF₃SO₃ | 10% en masse |

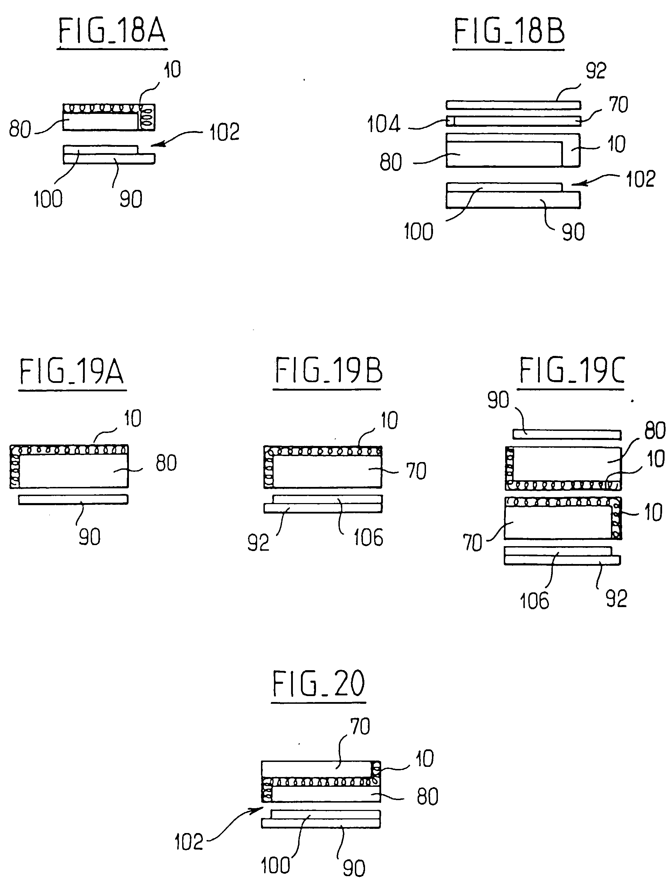

L'ensemble 10/80 ainsi obtenu est déposé côté cathode 80 sur une feuille 90 en polypropylène métallisée au nickel 100 avec une marge de 5mm non métallisée côté électrolyte, comme on le voit sur la figure 18A.

En parallèle, une feuille de lithium laminée est préparée pour former l'anode 70. Pour cela de préférence un ruban de lithium de 300µm d'épaisseur est ramené à 100µm par laminage à froid entre deux cales de polypropylène 104 d'épaisseur 100µm et de 5mm de large.

Après avoir déposé la feuille de lithium laminée 70 côté électrolyte 10 sur l'ensemble 10/80 initialement bi-extrudé, le complexe obtenu est calandré en conservant une cale d'épaisseur 104 et en plaçant un film de polypropylène 92 sur l'anode en lithium 70, comme on le voit sur la figure 18B.

La cale 104 est positionnée de sorte que anode 70 et cathode 80 sont accessibles sur des tranches différentes.

Après calandrage le complexe 92/70/10/80/100/90 est bobiné et des connexions électriques au nickel sont disposées sur chaque côté ou tranche de l'enroulement par dépôt au pistolet électrique.

### Exemple 2

Ce deuxième exemple consiste tout d'abord à co-extruder l'électrolyte 10 et la cathode 80 suivant le profil conforme à la figure 1 avec les compositions suivantes :

| Composition cathode : | |
|---|---|
| MnO₂ | 78% en masse |
| C | 4% en masse |
| Graphite | 1% en masse |
| Polyoxyde d'éthylène PM 600000 | 6% en masse |
| Polyéthylène glycol | 6% en masse |
| LiCF₃SO₃ | 5% en masse |

| Composition Electrolyte | |
|---|---|
| Polyoxyde d'éthylène | 75% en masse |
| Cire de polyoléfine | 5% en masse |
| LiCF₃SO₃ | 10% en masse |
| MgO | 10% en masse |

Ce premier complexe cathode 80/électrolyte 10 est déposé sur une feuille métallique inoxydable 90 telle que du nickel d'une épaisseur de 5µm comme représentée sur la figure 19A.

En parallèle, comme représenté sur la figure 19B, on réalise un ensemble bicouche d'anode en lithium 70 et d'électrolyte 10 conforme au profil de la figure 1. Cet ensemble est réalisé de préférence par extrusion à froid. Cet ensemble 10/70 est ensuite déposé côté anode 70 sur un film 92 en polypropylène métallisé nickel 106, d'une épaisseur de 12µm.

Après avoir juxtaposé les électrolytes 10 des deux complexes, comme représenté sur la figure 19C de sorte que anode 70 en lithium et cathode 80 soient accessibles sur des tranches opposées, les complexes sont calandrés.

Puis l'ensemble est bobiné et des connexions électriques sont réalisées sur les tranches comme dans l'exemple 1.

### Exemple 3

Le troisième exemple consiste tout d'abord à réaliser une coextrusion tricouche cathode 80/électrolyte 10/anode 70, conforme au profil de la figure 3, comme représenté sur la figure 20, avec les compositions suivantes :

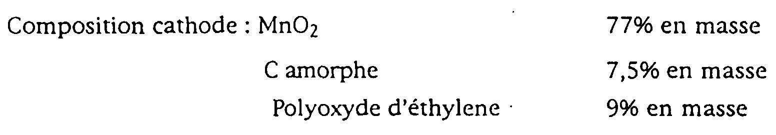

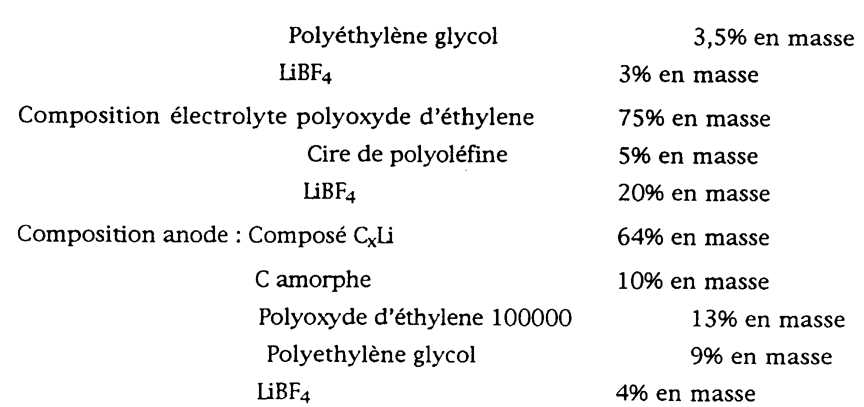

Ce complexe tricouche extrudé 70/10/80 est déposé, côté cathode 80 sur un film en polyéthylène 90 métallisé en 100 par une couche de métal ou alliage inoxydable, par exemple de nickel ou inox, avec marge 102, côté électrolyte.

Puis le complexe est bobiné et des connexions électriques sont réalisées sur les tranches du bobinage comme dans l'exemple 1.

Les exemples qui précèdent concernent la fabrication de générateur.

On va maintenant décrire deux exemples concernant la fabrication de supercondensateurs.

Selon les deux exemples qui vont suivre, les deux électrodes placées respectivement de part et d'autre de l'électrolyte 10 sont de nature identique.

### Exemple 4

Le quatrième exemple consiste tout d'abord à réaliser une extrusion bicouche d'une couche d'électrolyte 10 de même composition que l'exemple 1, sur une couche d'électrode 75 de composition suivante, selon le profil de la figure 1:

| | |
|---|---|
| C amorphe | 10% en masse |
| C grande surface spécifique | 30% en masse |
| Polyoxyde d'éthylene | 40% en masse |
| Polyethylène glycol | 10% en masse |
| LiCF₃SO₃ | 10% en masse |

Le complexe bicouche extrudé ainsi obtenu 10/75 est déposé côté électrode 75 sur un film 90 en polypropylène métallisé nickel 100 avec une marge 102 de 5mm côté électrolyte, comme représenté sur la figure 21A.

Puis comme représenté sur la figure 21B, deux complexes sont adossés électrolyte 10 contre électrolyte 10 de sorte que les électrodes 75 soient accessibles sur des tranches opposées, et l'ensemble obtenu est calandré et enroulé.

Les connexions sont réalisées comme dans l'exemple 1.

### Exemple 5

Le cinquième exemple consiste tout d'abord à réaliser une extrusion tricouche électrode 75/électrolyte 10/électrode 75 selon un profil conforme à la figure 3, avec les compositions suivantes :

| Composition électrode : | |
|---|---|
| C amorphe | 15% en masse |
| C grande surface spécifique | 35% en masse |
| Liant (polyoxyde d'éthylene ou PVDF) | 48% en masse |
| Processing Aid | 2% en masse |
| Composition électrolyte polyoxyde d'éthylene | 100% |

Comme représenté sur la figure 22, le complexe tricouche extrudé 75/10/75 est déposé entre deux films 110 en polyethylene ou polypropylène métallisé acier inoxydable ou nickel 112, avec marge 114 côté électrolyte.

L'ensemble est calandré et bobiné.

Les connexions électriques sont réalisées comme dans l'exemple 1.

De préférence, avant isolation dans un boîtier ou un bloc de résine les éléments sont imprégnés par un solvant organique dans lequel est dissous 1 sel - par exemple un solvant de carbonate de propylène et un sel tel que le bi (trifluoro sulfonate) imide de Li à 45% en masse.

On va maintenant décrire la variante de mise en oeuvre représentée schématiquement sur les figures 23 et 24.

Selon cette variante, le procédé conforme à la présente invention comprend une première étape qui consiste en la préparation d'une électrode 80, cathode ou anode, par extrusion CAST calandrage. Un tel processus d'extrusion CAST consiste à recevoir le matériau extrudé, à la sortie de la filière, sur un support, de préférence chauffé, adapté pour permettre un étirage du matériau extrudé.

Sur la figure 23, on a représenté sous la référence générale 200 l'extrudeuse pour cette électrode 80.

De préférence à la sortie de l'extrudeuse 200 le film d'électrode 80 est protégé sur ses deux faces principales par deux feuilles de protection 210, 212, ou une feuille de protection 210 et un collecteur de courant 212.

Les feuilles de protection 210, 212 sont formées de préférence de polyester. La feuille servant de collecteur de courant est formée de préférence d'une feuille plastique métallisée.

L'électrode 80 ainsi protégée par les feuilles 210, 212 est de préférence soumise ensuite à une opération de calandrage, dans un poste de calandrage 220, avec chauffe entre 30 et 50°C des deux cylindres, ou d'un seul du poste de calandrage 220. L'opération de calandrage peut être réalisée en une ou plusieurs étapes. Elle est de préférence adaptée pour obtenir une électrode 80 couche mince comprise entre 170µm et 40µm.

La seconde étape de cette variante consiste, après avoir retiré les feuilles de protection 210, 212, comme schématisé sur la figure 24, à enrober partiellement l'électrode 80 par l'électrolyte 10, lors d'une opération d'extrusion réalisée à travers une filière schématisée sous la référence 230 sur la figure 24.

Bien entendu dans le cas où l'une des feuilles 210, 212 est formée d'un collecteur de courant, ce collecteur de courant est maintenu sur l'électrode 80 à travers la filière 230.

Sur la figure 25 qui représente une vue en coupe de l'ensemble obtenu à la sortie de la filière 230, on a schématisé l'électrolyte 10 sous forme d'un L comparable au dessin de la figure 1. Cette représentation ne doit cependant pas être considérée comme limitative. En pratique, cette variante de mise en oeuvre illustrée sur les figures 23 et 24 peut être utilisée pour former un électrolyte conforme à l'une quelconque des sections précédemment décrites et illustrées sur les figures précédentes.

La seconde électrode 70, anode ou cathode, peut être déposée sur l'ensemble obtenu à la sortie de la filière 230 par tout moyen approprié. La seconde électrode 70 peut par exemple être co-extrudée avec l'électrolyte 10 dans la filière 230, ou encore réalisée séparément et déposée sur le complexe 10, 80, comme décrit précédemment.

Bien entendu la présente invention n'est pas limitée au mode de réalisation particulier qui vient d'être décrit mais s'étend à toute variante conforme à son esprit.

Par rapport à l'état de la technique, la présente invention offre en particulier les avantages suivants :
- elle permet la réalisation d'ensembles électrochimiques multicouches, à l'aide d'un nombre d'étapes inférieur aux techniques antérieures ce qui permet notamment de réduire le coût de fabrication et d'augmenter la fiabilité, en particulier en limitant les risques de pollution,
- elle évite l'utilisation de solvants et d'une étape de séchage, ce qui représente un avantage économique et écologique important,
- elle permet d'éviter toute altération chimique du lithium,
- elle permet de réaliser des ensembles électrochimiques complets sur une ligne de fabrication courte, directement en sortie de l'extrudeuse,
- elle permet d'améliorer les interfaces entre les différentes couches des ensembles électrochimiques,
- elle permet de réaliser au choix des générateurs ou des super-condensateurs,
- elle permet d'adapter aisément la largeur des ensembles à chaque cahier des charges particulier,
- elle permet une parfaite reproductibilité industrielle,
- elle permet de maîtriser avec précision les épaisseurs des différentes couches utilisées, ainsi que leur régularité.

Par ailleurs, selon les applications considérées, on peut bien entendu connecter plusieurs des ensembles précités en parallèle ou en série.

## Revendications

1. Procédé de fabrication d'un ensemble électrochimique multicouche , caractérisé par le fait qu'il comprend les étapes consistant à :
- extruder un élément comprenant un film d'électrolyte (10) à base de polymère conducteur ionique et au moins un film d'électrode (70, 80), dans une filière conformée de telle sorte que l'électrode (70, 80) soit accessible sur au moins une face principale (1, 2) de l'élément extrudé et au plus sur une tranche (3, 4) de cet élément,
- enrouler un complexe à base de l'élément extrudé précité, comprenant la couche d'électrolyte (10) et deux électrodes (70, 80; 75) disposées respectivement de part et d'autre de l'électrolyte (10), telles qu'une cathode et une anode, sous forme d'une structure présentant sur des faces différentes de ses tranches, des prises de contact électrique respectivement avec les deux électrodes, et
- opérer une métallisation sur ces faces de la tranche de la structure.

2. Procédé selon la revendication 1, caractérisé par le fait que l'une des électrodes (70, 80) forme une anode tandis que la seconde électrode forme une cathode (80, 70) et l'ensemble électrochimique constitue un générateur de courant électrique.

3. Procédé selon la revendication 1, caractérisé par le fait que les deux électrodes (75) sont de même nature et l'ensemble électrochimique constitue un super-condensateur.

4. Procédé conforme à l'une des revendications 1 à 3, caractérisé par le fait qu'il consiste à co-extruder le film d'électrolyte (10) avec une électrode adjacente (70, 80 ; 75) sous forme d'un complexe bicouche.

5. Procédé selon l'une des revendications 1 à 3, caractérisé par le fait qu'il consiste à co-extruder le film d'électrolyte (10) avec deux électrodes (70, 80 ; 75) respectivement adjacentes sous forme d'un complexe tricouche.

6. Procédé selon l'une des revendications 1 à 4, caractérisé par le fait qu'il consiste à réaliser par bi-extrusion un film d'électrolyte (10) présentant un profil en L, couvrant totalement une face principale (1) de la feuille extrudée et totalement l'une des deux tranches (3) de celle-ci en débouchant ainsi sur un bord de la seconde face principale (2), l'électrode co-extrudée (50) étant accessible sur une partie de la seconde face principale (2) et sur une partie de la seconde tranche (4) de la feuille.

7. Procédé conforme à l'une des revendications 1 à 4, caractérisé par le fait qu'il consiste à réaliser par bi-extrusion un film d'électrolyte (10) présentant un profil en U couvrant totalement une face principale (1) de la feuille extrudée et totalement les deux tranches (3, 4) de celle-ci, l'électrode (50) co-extrudée étant accessible sur une partie de la seconde face principale (2) entre les bords d'électrolyte.

8. Procédé conforme à l'une des revendications 1 à 5, caractérisé par le fait qu'il consiste à réaliser par tri-extrusion un film d'électrolyte (10) comprenant une âme interne (11) s'étendant sur toute la largeur de la feuille extrudée et possédant à ses extrémités respectives des prolongements (12, 13) qui couvrent une partie des tranches respectives (3, 4) et débouchent respectivement sur un bord des faces principales (1, 2) de la feuille extrudée, les couches d'électrode (50, 60) étant disposées respectivement de part et d'autre de l'âme interne (11) et étant ainsi accessibles sur une partie de la première et de la seconde faces principales (1, 2) ainsi que sur une partie des tranches (3 et 4) de la feuille extrudée.

9. Procédé conforme à l'une des revendications 1 à 5, caractérisé par le fait qu'il consiste à réaliser par tri-extrusion un film d'électrode présentant un profil en H possédant une âme interne (11) qui s'étend sur toute la largeur de la feuille extrudée et possède à ses extrémités respectives des prolongements (12, 13, 14, 15) qui couvrent intégralement les tranches respectives (3, 4) et débouchent sur un bord de chacune des faces principales (2, 1), les couches d'électrodes (50, 60) étant disposées respectivement de part et d'autre de l'âme interne (11) et étant accessibles respectivement sur une partie de la première et de la seconde face principale (1, 2) entre les prolongements (12, 13, 14 et 15) de l'électrolyte.

10. Procédé conforme à l'une des revendications 1 à 5, caractérisé par le fait qu'il consiste à réaliser par tri-extrusion un film d'électrolyte (10) présentant un profil général en U possédant une âme (16) qui s'étend perpendiculairement aux faces principales (1, 2) de la feuille extrudée et deux branches (17, 18) parallèles entre elles et parallèles aux faces principales (1, 2) tout en étant distantes de celles-ci, les extrémités libres des branches (17, 18) opposées à l'âme (16) étant munies de prolongements (19, 20) vers l'extérieur accessibles sur les faces principales (1, 2), et les deux électrodes (50, 60) étant placées respectivement à l'intérieur de l'espace défini entre les branches (17, 18) et sur l'extérieur de celles-ci afin d'être accessibles respectivement sur des tranches différentes de la feuille extrudée.

11. Procédé selon la revendication 10, caractérisé par le fait que l'âme (16) de la couche d'électrolyte (10) est accessible sur l'une (4) des tranches de la feuille extrudée.

12. Procédé selon la revendication 10, caractérisé par le fait que l'âme (16) de l'électrolyte (10) est distante de la tranche (4) de la feuille extrudée.

13. Procédé selon l'une des revendications 10 et 11, caractérisé par le fait que les prolongements (19, 20) sont accessibles sur la seconde tranche (3) de la feuille extrudée.

14. Procédé selon l'une des revendications 10 et 12, caractérisé par le fait que les prolongements (19, 20) sont distants de la seconde tranche (3) de la feuille extrudée.

15. Procédé selon l'une des revendications 6 à 9, caractérisé par le fait que un séparateur isolant électrique est intercalé entre deux complexes adjacents.

16. Procédé selon l'une des revendications 10 à 14, caractérisé par le fait que au moins deux complexes sont accolés sans séparateur isolant électrique intercalé.

17. Procédé selon l'une des revendications 1 à 16, caractérisé par le fait que le film d'électrolyte (10) comprend un matériau polymère associé à un sel de lithium.

18. Procédé selon la revendication 17, caractérisé par le fait que le sel de lithium est associé au matériau polymère par mélange ou greffage.

19. Procédé selon l'une des revendications 17 ou 18, caractérisé par le fait que le film d'électrolyte comprend en outre une cire agissant en tant qu'agent glissant, agent retardant l'inflammation, agent de dispersion de charges et/ou agent facilitant l'extrusion.

20. Procédé selon la revendication 19, caractérisé par le fait que la quantité de cire dans le film d'électrolyte est de l'ordre de quelques % en masse.

21. Procédé selon l'une des revendications 19 et 20, caractérisé par le fait que la cire est choisie dans le groupe comprenant les polyoléfines, telles qu'un terpolymère-éthylène amorphe ou un polyéthylène faible viscosité, et les amides.

22. Procédé selon l'une des revendications 1 à 21, caractérisé par le fait que l'une des électrodes est constituée d'une anode à base de lithium.

23. Procédé selon la revendication 22, caractérisé par le fait que l'anode en lithium est extrudée.

24. Procédé selon la revendication 22, caractérisé par le fait que l'anode en lithium est réalisée par calandrage à froid, enduction en phase liquide, ou dépôt sous vide.

25. Procédé selon l'une des revendications 1 à 24, caractérisé par le fait que l'une des électrodes (80) est constituée d'une cathode en contact avec une feuille de métal associée à une feuille isolante ou un film métallisé ou une couche métallique associée à une feuille isolante.

26. Procédé selon l'une des revendications 1 à 25, caractérisé par le fait que l'une des électrodes (70) est constituée d'une anode en contact avec une feuille de métal associée à une feuille isolante ou un film métallisé ou une couche métallique associée à une feuille isolante.

27. Procédé selon l'une des revendications 1 à 26, caractérisé par le fait que l'une des électrodes est constituée d'une anode (70) en contact avec un film non conducteur (90).

28. Procédé selon l'une des revendications 1 à 27, caractérisé par le fait que le complexe comprenant un film d'électrolyte associé à deux électrodes (70, 80) et pourvu le cas échéant de feuilles de métal ou métallisées, possède une épaisseur comprise entre 100 et 500µm.

29. Procédé selon l'une des revendications 1 à 28, caractérisé par le fait que le complexe est calandré.

30. Procédé selon la revendication 29, caractérisé par le fait que le complexe est calandré à froid.

31. Procédé selon l'une des revendications 1 à 30, caractérisé par le fait qu'il consiste à enrouler deux complexes symétriques bi-couches respectivement co-extrudés, en adossant les couches d'électrolyte (10) de sorte que les deux électrodes soient accessibles sur des faces et/ou des tranches opposées de l'ensemble.

32. Procédé selon la revendication 31, caractérisé par le fait que les ensembles bi-couches co-extrudés sont conformes à l'une des revendications 6 ou 7.

33. Procédé selon l'une des revendications 1 à 30, caractérisé par le fait qu'il consiste à enrouler deux complexes symétriques bi-couches, en adossant côte à côte deux couches d'électrodes de même nature.

34. Procédé selon la revendication 33, caractérisé par le fait que les complexes sont conformes à la revendication 8.

35. Procédé selon l'une des revendications 1 à 34, caractérisé par le fait qu'une feuille électriquement conductrice (90, 92) comportant au moins une bordure marginale en matériau électriquement isolant (91, 93) est déposée sur chaque face principale du complexe avant enroulement de celui-ci.

36. Procédé selon l'une des revendications 1 à 35, caractérisé par le fait qu'il comprend les étapes suivantes :
- extrusion d'une cathode (80) sur un film support métallisé (90), puis extrusion de l'électrolyte (10) sur cet ensemble (80, 90),
- extrusion d'une anode en lithium (70) sur un film support (92),
- calandrage des deux complexes précédemment obtenus.

37. Procédé selon l'une des revendications 1 à 35, caractérisé par le fait qu'il comprend les étapes suivantes :
- co-extrusion d'une cathode (80) et de l'électrolyte (10) sur un film support métallisé (90),
- extrusion d'une anode en lithium (70) sur un film support (92),
- calandrage des deux complexes précédemment obtenus.

38. Procédé selon l'une des revendications 1 à 35, caractérisé par le fait qu'il comprend les étapes suivantes :
- extrusion d'une cathode (80) sur un film support métallisé (90),
- co-extrusion d'une anode en lithium (70) et de l'électrolyte (10) sur un film support (92),
- calandrage des deux complexes précédemment obtenus.

39. Procédé selon l'une des revendications 1 à 35, caractérisé par le fait qu'il comprend les étapes suivantes :
- co-extrusion d'une cathode en matériau composite (80), de l'électrolyte (10) et d'une anode en lithium (70) sur un film support métallisé (90) ou sur le film support (92),
- calandrage de cet ensemble sur un film support (92) ou un film support métallisé (90).

40. Procédé selon l'une des revendications 1 à 35, caractérisé par le fait qu'il comprend les étapes suivantes :
- préparation d'une électrode (80) par extrusion CAST avec protection des deux faces principales de l'électrode (80) en sortie de l'extrudeuse, par deux feuilles de protection (210, 212) ou une feuille de protection (210) et un collecteur de courant (212),
- extrusion de l'électrolyte (10) sur l'ensemble ainsi obtenu, après avoir retiré la ou les feuilles de protection (210, 212).

41. Procédé selon la revendication 40, caractérisé par le fait que les feuilles de protection (210, 212) sont formées de polyester.

42. Procédé selon l'une des revendications 40 ou 41, caractérisé par le fait qu'il comprend en outre l'opération consistant à calandrer l'électrode (80) protégée avant de réaliser l'extrusion de l'électrolyte (10).

43. Procédé selon l'une des revendications 40 à 42, caractérisé par le fait que la seconde électrode (70) est déposée sur l'ensemble obtenu après extrusion de l'électrolyte (10), par co-extrusion avec cette électrolyte (10) ou dépôt de la seconde électrode réalisée séparément.

44. Procédé conforme à l'une des revendications 1 à 43, caractérisé par le fait qu'il comprend en outre l'étape consistant à écraser les enroulements obtenus sous forme de galettes.

45. Procédé conforme à l'une des revendications 1 à 44, caractérisé par le fait que les connexions électriques sur les tranches de la structure sont obtenues par dépôt en phase fondue de métal ou d'alliage à faible point de fusion et à bonne conductivité électrique, par exemple par dépôt avec pistolet électrique.

## Patentansprüche

1. Verfahren zur Herstellung einer elektrochemischen Mehrschichten-Einheit, dadurch gekennzeichnet, daß es die folgenden Stufen umfaßt:
- Extrudieren eines Elements, das einen Elektrolytfilm (10) auf Basis eines lonenleiter-Polymers und mindestens einen Elektrodenfilm (70, 80) umfaßt, mit einem entsprechenden Spritzmundstück in der Weise, daß die Elektrode (70, 80) auf mindestens einer Hauptoberfläche (1, 2) des extrudierten Elements und höchstens auf einem Abschnitt (3, 4) dieses Elements zugänglich ist,
- Zusammenrollen (Aufwickeln) eines Komplexes auf Basis des obengenannten extrudierten Elements, der die Elektrolytschicht (10) und zwei Elektroden (70, 80; 75), die jeweils beiderseits des Elektrolyten (10) angeordnet sind, beispielsweise eine Kathode und eine Anode umfaßt, in Form einer Struktur, die auf unterschiedlichen Oberflächen ihre Abschnitte jeweils elektrische Kontaktstellen mit den beiden Elektroden aufweist, und
- Durchführung einer Metallisierung (Galvanisierung) dieser Abschnittsflächen der Struktur.

2. Verfahren nach Anspruch 1, dadurch gekennzeichnet, daß eine der Elektroden (70, 80) eine Anode bildet, während die zweite Elektrode eine Kathode (80, 70) bildet, und daß die elektrochemische Einheit einen elektrischen Stromgenerator darstellt.

3. Verfahren nach Anspruch 1, dadurch gekennzeichnet, daß die beiden Elektroden (75) von gleicher Art sind und daß die elektrochemische Einheit einen Superkondensator darstellt.

4. Verfahren nach einem der Ansprüche 1 bis 3, dadurch gekennzeichnet, daß es darin besteht, den Elektrolyffilm (10) mit einer daran angrenzenden Elektrode (70, 80; 75) in Form eines Doppelschichten-Komplexes zu coextrudieren.

5. Verfahren nach einem der Ansprüche 1 bis 3, dadurch gekennzeichnet, daß es darin besteht, den Elektrolytfilm (10) mit jeweils zwei daran angrenzenden Elektroden (70, 80; 75) in Form eines Dreischichten-Komplexes zu koextrudieren.

6. Verfahren nach einem der Ansprüche 1 bis 4, dadurch gekennzeichnet, daß es darin besteht, durch Biextrusion einen Elektrolyffilm (10) herzustellen, der ein L-Profil aufweist und eine Hauptoberfläche (1) der extrudierten Folie sowie einen der beiden Abschnitte (3) derselben vollständig bedeckt,der auf diese Weise in einen Rand der zweiten Hauptoberfläche (2) einmündet, wobei die coextrudierte Elektrode (50) auf einem Teil der zweiten Hauptoberfläche (2) und auf einem Teil des zweiten Abschnitts (4) der Folie zugänglich ist.

7. Verfahren nach einem der Ansprüche 1 bis 4, dadurch gekennzeichnet, daß es darin besteht, durch Biextrusion einen Elektrolyffilm (10) herzustellen, der ein U-Profil aufweist und eine Hauptoberfläche (1) der extrudierten Folie sowie die beiden Abschnitte (3, 4) derselben vollständig bedeckt, wobei die coextrudierte Elektrode (50) auf einem Teil der zweiten Hauptoberfläche (2) zwischen den Elektrolyt-Rändern zugänglich ist.

8. Verfahren nach einem der Ansprüche 1 bis 5, dadurch gekennzeichnet, daß es darin besteht, durch Triextrusion einen Elektrolyffilm (10) herzustellen, der eine innere Seele (11) umfaßt, die sich über die gesamte Breite der extrudierten Folie erstreckt und an ihren jeweiligen Enden Verlängerungen (12, 13) aufweist, die einen Teil der jeweiligen Abschnitt (3, 4) bedecken und jeweils in einen Rand der Hauptoberflächen (1, 2) der extrudierten Folie einmünden, wobei die Elektrodenschichten (50, 60) jeweils beiderseits der inneren Seele (11) angeordnet sind und auf diese Weise auf einem Teil der ersten und der zweiten Hauptoberflächen (1, 2) sowie auf einem Teil der Abschnitte (3 und 4) der extrudierten Folie zugänglich sind.

9. Verfahren nach einem der Ansprüche 1 bis 5, dadurch gekennzeichnet, daß es darin besteht, daß man durch Triextrusion einen Elektrodenfilm herstellt, der ein H-Profil aufweist und eine innere Seel (11) besitzt, die sich über die gesamte Breite der extrudierten Folie erstreckt und an ihren jeweiligen Enden Verlängerungen (12, 13, 14, 15) aufweist, welche die jeweiligen Abschnitte (3, 4) integral bedecken und in einem Rand jeder der Hauptoberflächen (2, 1) münden, wobei die Elektrodenschichten (50, 60) jeweils beiderseits der inneren Seele (11) angeordnet sind und jeweils auf einem Teil der ersten und der zweiten Hauptoberflächen (1, 2) zwischen den Verlängerungen (12, 13, 14 und 15) des Elektrolyten zugänglich sind.

10. Verfahren nach einem der Ansprüche 1 bis 5, dadurch gekennzeichnet, daß es darin besteht, durch Triextrusion einen Elektrolytfilm (10) herzustellen, der ein generelles U-Profil aufweist, das eine Seele (16) besitzt, die sich senkrecht zu den Hauptoberflächen (1, 2) des extrudierten Films und zwei untereinander parallelen Zweigen (Schenkeln) (17, 18), die parallel zu den Hauptoberflächen (1, 2) sind, von diesen jedoch einen Abstand haben, erstreckt, wobei die freien Enden der Zweige (Schenkel) (17, 18), die der Seele (16) gegenüber liegen, mit Verlängerungen (19, 20) nach innen ausgestattet sind, die auf den Hauptoberflächen (1, 2) zugänglich sind, und die beiden Elektroden (50, 60) jeweils im Innern des zwischen den Zweigen (Schenkeln) (17, 18) definierten Raumes und auf dem äußeren desselben angeordnet sind, um jeweils auf den verschiedenen Abschnitten des extrudierten Films zugänglich zu sein.

11. Verfahren nach Anspruch 10, dadurch gekennzeichnet, daß die Seele (16) der Elektrolytschicht (10) auf einem (4) der Abschnitte der extrudierten Folie zugänglich ist.

12. Verfahren nach Anspruch 10, dadurch gekennzeichnet, daß die Seele (16) des Elektrolyten (10) einen Abstand von dem Abschnitt (4) der extrudierten Folie hat.

13. Verfahren nach einem der Ansprüche 10 und 11, dadurch gekennzeichnet, daß die Verlängerungen (19, 20) auf dem zweiten Abschnitt (3) der extrudierten Folie zugänglich sind.

14. Verfahren nach einem der Ansprüche 10 und 12, dadurch gekennzeichnet, daß die Verlängerungen (19, 20) einen Abstand von dem zweiten Abschnitt (3) der extrudierten Folie haben.

15. Verfahren nach einem der Ansprüche 6 bis 9, dadurch gekennzeichnet, daß ein elektrisch isolierender Separator zwischen zwei aneinandergrenzenden Komplexen eingefügt ist.

16. Verfahren nach einem der Ansprüche 10 bis 14, dadurch gekennzeichnet, daß mindestens zwei Komplexe ohne dazwischenliegendem elektrisch isolierendem Separator aneinandergefügt sind.

17. Verfahren nach einem der Ansprüche 1 bis 16, dadurch gekennzeichnet, daß der Elektrolytfilm (10) ein mit einem Lithiumsalz kombiniertes Polymermaterial umfaßt.

18. Verfahren nach Anspruch 17, dadurch gekennzeichnet, daß das Lithiumsalz durch Mischen oder Aufpfropfen mit dem Polymermaterial kombiniert wird.

19. Verfahren nach einem der Ansprüche 17 oder 18, dadurch gekennzeichnet, daß der Elektrolyffilm außerdem ein als Gleitmittel dienendes Wachs, ein flammwidrig machendes Mittel, ein Füllstoff-Dispergiermittel und/oder ein Mittel zur Erleichterung der Extrusion enthält.

20. Verfahren nach Anspruch 19, dadurch gekennzeichnet, daß die Menge des Wachses in dem Elektrolytfilm in der Größenordnung von einigen Massenprozent liegt.

21. Verfahren nach einem der Ansprüchen 19 und 20, dadurch gekennzeichnet, daß das Wachs ausgewählt wird aus der Gruppe, welche die Polyolefine, z.B. ein amorphes Ethylen-Terpolymer oder ein Polyethylen mit geringer Viskosität, und die Amide umfaßt.

22. Verfahren nach einem der Ansprüchen 1 bis 21, dadurch gekennzeichnet, daß eine der Elektroden aus einer Anode auf Lithiumbasis besteht.

23. Verfahren nach Anspruch 22, dadurch gekennzeichnet, daß die Lithiumanode extrudiert wird.

24. Verfahren nach Anspruch 22, dadurch gekennzeichnet, daß die Lithiumanode durch kaltes Kalandrieren, durch Beschichten in wäßriger Phase oder durch Abscheidung unter Vakuum hergestellt wird.

25. Verfahren nach einem der Ansprüche 1 bis 24, dadurch gekennzeichnet, daß eine der Elektroden (80) aus einer Kathode besteht, die im Kontakt steht mit einer Metallfolie, die mit einer isolierenden Folie verbunden ist, oder mit einem metallisierten (galvanisierten) Film oder mit einer Metallschicht, die mit einer isolierenden Folie verbunden ist.

26. Verfahren nach einem der Ansprüche 1 bis 25, dadurch gekennzeichnet, daß eine der Elektroden (70) aus einer Anode besteht, die im Kontakt steht mit einer Metallfolie, die mit einer isolierenden Folie verbunden ist, oder mit einem metallisierten Film oder mit einer Metallschicht, die mit einer isolierenden Folie verbunden ist.

27. Verfahren nach einem der Ansprüche 1 bis 26, dadurch gekennzeichnet, daß eine der Elektroden aus einer Anode (70) im Kontakt mit einem Nichtleiterfilm (90) besteht.

28. Verfahren nach einem der Ansprüche 1 bis 27, dadurch gekennzeichnet, daß der Komplex einen Elektrolytfilm umfaßt, der zwei Elektroden (70, 80) zugeordnet ist und gegebenenfalls Metallfolien oder metallisierte Folien aufweist, die eine Dicke zwischen 100 und 500 µm haben.

29. Verfahren nach einem der Ansprüche 1 bis 28, dadurch gekennzeichnet, daß der Komplex kalandriert wird.

30. Verfahren nach Anspruch 29, dadurch gekennzeichnet, daß der Komplex kalt kalandriert wird.

31. Verfahren nach einem der Ansprüche 1 bis 30, dadurch gekennzeichnet, daß es darin besteht, zwei symmetrische Doppelschichten-Komplexe, die jeweils coextrudiert worden sind, aufzuwickeln, wobei man die Elektrolytschichten (10) so anordnet, daß die beiden Elektroden auf den Oberflächen und/oder gegenüberliegenden Abschnitten der Einheit zugänglich sind.

32. Verfahren nach Anspruch 31, dadurch gekennzeichnet, daß die coextrudierten Doppelschichten-Einheiten einem der Ansprüche 6 oder 7 entsprechen.

33. Verfahren nach einem der Ansprüche 1 bis 30, dadurch gekennzeichnet, daß es darin besteht, zwei symmetrische Doppelschichten-Komplexe aufzuwickeln, indem man zwei Elektrodenschichten gleicher Art aneinanderlegt.

34. Verfahren nach Anspruch 33, dadurch gekennzeichnet, daß diese Komplexe dem Anspruch 8 entsprechen.

35. Verfahren nach einem der Ansprüche 1 bis 34, dadurch gekennzeichnet, daß eine elektrisch leitende Folie (90,92), die mindestens eine Rand-Bordüre aus einem elektrisch isolierenden Material (91, 93) enthält, auf jeder Hauptoberfläche des Komplexes vor dem Einrollen desselben abgeschieden wird.

36. Verfahren nach einem der Ansprüche 1 bis 35, dadurch gekennzeichnet, daß es die folgenden Stufen umfaßt:
- Extrudieren einer Kathode (80) auf einen metallisierten Filmträger (90) und anschließendes Extrudieren des Elektrolyten (10) auf diese Einheit (80, 90),
- Extrudieren einer Lithiumanode (70) auf einen Trägerfilm (92) und
- Kalandrieren der beiden oben erhaltenen Komplexe.

37. Verfahren nach einem der Ansprüche 1 bis 35, dadurch gekennzeichnet, daß es die folgenden Stufen umfaßt:
- Coextrudieren einer Kathode (80) und des Elektrolyten (10) auf einen metallisierten Trägerfilm (90),
- Extrudieren einer Lithiumanode (70) auf einen Trägerfilm (92) und
- Kalandrieren der beiden oben erhaltenen Komplexe.

38. Verfahren nach einem der Ansprüche 1 bis 35, dadurch gekennzeichnet, daß es die folgenden Stufen umfaßt:
- Extrudieren einer Kathode (80) auf einen metallisierten Trägerfilm (90),
- Coextrudieren einer Lithiumanode (70) und des Elektrolyten (10) auf einen Trägerfilm (92) und
- Kalandrieren der beiden oben erhaltenen Komplexe.

39. Verfahren nach einem der Ansprüche 1 bis 35, dadurch gekennzeichnet, daß es die folgenden Stufen umfaßt:
- Coextrudieren einer Kathode aus einem Verbundmaterial (80), der Elektrode (10) und einer Lithiumanode (70) auf einen metallisierten Trägerfilm (90) oder auf den Trägerfilm (92),
- Aufkalandrieren dieser Einheit auf einen Trägerfilm (92) oder einen metallisierten Trägerfilm (90).

40. Verfahren nach einem der Ansprüche 1 bis 35, dadurch gekennzeichnet, daß es die folgenden Stufen umfaßt:
- Herstellung einer Elektrode (80) durch CAST-Extrusion unter Schützen der beiden Hauptoberflächen der Elektrode (80) beim Austritt aus dem Extruder durch zwei Schutzfolien (210, 212) oder eine Schutzfolie (210) und einen Stromkollektor (212),
- Extrudieren des Elektrolyten (10) auf die so erhaltene Einheit, nach dem die Schutzfolie(n) (210, 212) abgezogen worden ist (sind).

41. Verfahren nach Anspruch 40, dadurch gekennzeichnet, daß die Schutzfolien (210, 212) aus Polyester hergestellt sind.

42. Verfahren nach einem der Ansprüche 40 oder 41, dadurch gekennzeichnet, daß es außerdem einen Arbeitsgang umfaßt, der darin besteht, die geschützte Elektrode (80) vor Durchführung der Extrusion des Elektrolyten (10) zu kalandrieren.

43. Verfahren nach einem der Ansprüche 40 bis 42, dadurch gekennzeichnet, daß die zweite Elektrode (70) auf der nach der Extrusion des Elektrolyten (10) erhaltenen Einheit abgeschieden wird durch Coextrusion mit diesem Elektrolyten (10) oder durch getrennt durchgeführte Abscheidung der zweiten Elektrode.

44. Verfahren nach einem der Ansprüche 1 bis 43, dadurch gekennzeichnet, daß es außerdem eine Stufe umfaßt, die darin besteht, die in Form von Scheiben erhaltenen Wicklungen flachzudrücken.

45. Verfahren nach einem der Ansprüche 1 bis 44, dadurch gekennzeichnet, daß die elektrischen Verbindungen auf den Abschnitten der Struktur erhalten werden durch Abscheidung von Metall oder einer Legierung mit niedrigem Schmelzpunkt und guter elektrischer Leiffähigkeit aus der geschmolzenen Phase, beispielsweise durch Abscheidung mit einer elektrischen Pistole.

## Claims

1. A method of manufacturing a multilayer electrochemical assembly, characterized by the fact that it comprises the following steps:
extruding an element comprising at least one electrode film (70, 80) and an electrolyte film (10) based on an ionic conductor polymer, the extrusion being through a die shaped in such a manner that the electrode (70, 80) is accessible from at least one main face (1, 2) of the extruded element and from no more than one of the edges (3, 4) of said element;
spiral winding a complex based on the above-specified extruded element, the complex comprising the electrolyte layer (10) plus two electrodes (70, 80; 75) such as a cathode and an anode, disposed on respective opposite sides of the electrolyte (10), to form a structure having, on different edge faces thereof, means for making electrical contact with respective ones of the two electrodes; and
metallizing said edge faces of the structure.

2. A method according to claim 1, characterized by the fact that one of the electrodes (70, 80) forms an anode while the other electrode forms a cathode (80, 70), and the electrochemical assembly constitutes an electrical battery cell.

3. A method according to claim 1, characterized by the fact that both electrodes (75) are of the same kind, and the electrochemical assembly constitutes a supercapacitor.

4. A method according to any one of claims 1 to 3, characterized by the fact that it consists in co-extruding the electrolyte film (10) with an adjacent electrode (70, 80; 75) in the form of a two-layer complex.

5. A method according to any one of claims 1 to 3, characterized by the fact that it consists in co-extruding the electrolyte film (10) with two electrodes (70, 80; 75) respectively adjacent thereto, thereby forming a three-layer complex.

6. A method according to any one of claims 1 to 4, characterized by the fact that it consists in using bi-extrusion to form an electrolyte film (10) having an L-shaped profile that covers one of the main faces (1) of the extruded sheet in full and that covers one of the two edges (3) thereof in full, thereby extending along a margin of the second main face (2), the co-extruded electrode (50) being accessible from a fraction of the second main face (2) and from a fraction of the second edge (4) of the sheet.

7. A method according to any one of claims 1 to 4, characterized by the fact that it consists in using bi-extrusion to make an electrolyte film (10) having a U-shaped profile that covers one of the main faces (1) of the extruded sheet in full and that covers both edges (3, 4) thereof in full, the co-extruded electrode (50) being accessible from a fraction of the second main face (2) between the electrolyte margins.

8. A method according to any one of claims 1 to 5, characterized by the fact that it consists in using tri-extrusion to make an electrolyte film (10) comprising an internal core (11) extending over the entire width of the extruded sheet and possessing extensions (12, 13) at its respective ends that cover the respective edges (3, 4) in part and that extend along respective margins of the main faces (1, 2) of the extruded sheet, the electrode layers (50, 60) being disposed on respective opposite sides of the internal core (11) and thus being accessible from a fraction of the first and second main faces (1, 2), and also from a fraction of the edges (3 and 4) of the extruded sheet.

9. A method according to any one of claims 1 to 5, characterized by the fact that it consists in using tri-extrusion to make an electrode film having an H-shaped profile, possessing an internal core (11) which extends across the entire width of the extruded sheet and which possesses extensions (12, 13, 14, 15) at its respective ends that completely overlie the respective edges (3, 4), and that extend to respective margins in both of the main faces (2, 1), the electrode layers (50, 60) being disposed on respective opposite sides of the internal core (11) and each being accessible from a fraction a respective one of the first and second main faces (1, 2) between the extensions (12, 13. 14 and 15) of the electrolyte.

10. A method according to any one of claims 1 to 5, characterized by the fact that they consist in using tri-extrusion to make an electrolyte film (10) having a generally U-shaped profile possessing a core (16) which extends perpendicularly to the main faces (1, 2) of the extruded sheet, and two mutually parallel branches (17. 18) which are parallel to the main faces (1, 2) while being set back therefrom, the free ends of the branches (17, 18) distant from the core (16) being provided with outwardly directed extensions (19, 20) that are accessible from the main faces (1, 2), and the two electrodes (50, 60) being placed respectively inside the space defined between the branches (17. 18) and on the outsides of the branches so as to be accessible respectively from different edges of the extruded sheet.

11. A method according to claim 10, characterized by the fact that the core (16) of the electrolyte layer (10) is accessible from one (4) of the edges of the extruded sheet.

12. A method according to claim 10, characterized by the fact that the core (16) of the electrolyte (10) is set back from the edge (4) of the extruded sheet.

13. A method according to claim 10 or 11, characterized by the fact that the extensions (19, 20) are accessible from the second edge (3) of the extruded sheet.

14. A method according to claim 10 or 12, characterized by the fact that the extensions (19, 20) are set back from the second edge (3) of the extruded sheet.

15. A method according to any one of claims 6 to 9, characterized by the fact that an electrically insulating separator is interposed between two adjacent complexes.

16. A method according to any one of claims 10 to 14, characterized by the fact that at least two complexes are pressed together without having an interposed electrically insulating separator.

17. A method according to any one of claims 1 to 16, characterized by the fact that the electrolyte film (10) comprises a polymer material associated with a lithium salt.

18. A method according to claim 17, characterized by the fact that the lithium salt is associated with the polymer material by mixing or by grafting.

19. A method according to claim 17 or 18, characterized by the fact that the electrolyte film further includes a wax acting as a sliding agent, as a flame retarding agent, and a charge dispersion agent, and/or as an agent for facilitating extrusion.

20. A method according to claim 19, characterized by the fact that the quantity of wax in the electrolyte film is of the order of a few percent by weight.

21. A method according to claim 19 or 20, characterized by the fact that the wax is selected from the group comprising polyolefins such as an amorphous ethylene terpolymer or a low viscosity polyethylene, and amides.

22. A method according to any one of claims 1 to 21, characterized by the fact that one of the electrodes is constituted by an anode based on lithium.

23. A method according to claim 22, characterized by the fact that the lithium anode is extruded.

24. A method according to claim 22, characterized by the fact that the lithium anode is made by cold calendaring, by spreading in the liquid phase, or by vacuum deposition.

25. A method according to any one of claims 1 to 24, characterized by the fact that one of the electrodes (80) is constituted by a cathode in contact with a sheet of metal associated with an insulating sheet, or a metallized film or a metal layer associated with an insulating sheet.

26. A method according to any one of claims 1 to 25, characterized by the fact that one of the electrodes (70) is constituted by an anode in contact with a metal sheet associated with an insulating sheet or a metallized film or a metal layer associated with an insulating sheet.

27. A method according to any one of claims 1 to 26, characterized by the fact that one of the electrodes is constituted by an anode (70) in contact with a non-conductive film (90).

28. A method according to any one of claims 1 to 27, characterized by the fact that the complex comprising an electrolyte film associated with two electrodes (70, 80) and provided, where appropriate, with metallized or metal sheets, has a thickness lying in the range 100 µm to 500 µm.

29. A method according to any one of claims 1 to 28, characterized by the fact that the complex is calendared.

30. A method according to claim 29, characterized by the fact that the complex is calendared while cold.

31. A method according to any one of claims 1 to 30, characterized by the fact that it consists in spiral winding two respective co-extruded two-layer symmetrical complexes, by placing their electrolyte layers (10) back-to-back so that the two electrodes are accessible from opposite faces and/or edges of the assembly.

32. A method according to claim 31, characterized by the fact that the co-extruded two-layer assemblies are as defined in claim 6 or 7.

33. A method according to any one of claims 1 to 30, characterized by the fact that it consists in spiral winding two symmetrical two-layer complexes, by placing two same-nature electrode layers side by side.

34. A method according to claim 33, characterized by the fact that the complexes are as defined in claim 8.

35. A method according to any one of claims 1 to 34, characterized by the fact that an electrically conductive sheet (90, 92) including at least one marginal border of electrically insulating material (91, 93) is deposited on each main face of the complex before it is spiral wound.

36. A method according to any one of claims 1 to 35, characterized by the fact that it comprises the following steps:
extruding a cathode (80) on a metal-covered support film (90), and then extruding the electrolyte (10) on said assembly (80, 90);
extruding a lithium anode (70) on a support film (92); and
calendaring together the two complexes as obtained above.

37. A method according to any one of claims 1 to 35, characterized by the fact that it comprises the following steps:
co-extruding a cathode (80) and an electrolyte (10) on a metallized support film (90);
extruding a lithium anode (70) on a support film (92); and
calendaring together the two complexes as obtained above.

38. A method according to any one of claims 1 to 35, characterized by the fact that it comprises the following steps:
extruding a cathode (80) on a metal-covered support film (90);
co-extruding a lithium anode (70) and the electrolyte (10) on a support film (92); and
calendaring together the two resulting complexes.

39. A method coring to any one of claims 1 to 35, characterized by the fact that it comprises the following steps:
co-extruding a cathode of composite material (80), the electrolyte (10), and a lithium anode (70) on the support film (92) or a metallized support film (90); and
calendaring said assembly onto a support film (92) or a metallized support film (90).

40. A method according to any one of claims 1 to 35, characterized by the fact that it comprises the following steps:
preparing an electrode (80) by means of CAST extrusion with both main faces of the electrode (80) being protected at the outlet from the extruder by two protective sheets (210, 212) or by one protective sheet (210) and a current collector (212); and
extruding the electrolyte (10) onto the resulting assembly, after removing any protective sheets (210, 212) therefrom.

41. A method according to claim 40, characterized by the fact that the protective sheets (210, 212) are made of polyester.

42. A method according to claim 40 or 41, characterized by the fact that it further comprises the operation of calendaring the protective electrode (80) before extruding the electrolyte (10).

43. A method according to any one of claims 40 to 42, characterized by the fact that the second electrode (70) is deposited on the assembly obtained after extrusion of the electrolyte (10), such deposition being by co-extrusion with said electrolyte (10) or by depositing the second electrolyte separately.

44. A method according to any one of claims 1 to 43, characterized by the fact that it further includes the step that consists in crushing the resulting spiral windings into the form of disks.

45. A method according to any one of claims 1 to 44, characterized by the fact that the electrical connections on the edges of the structure are obtained by depositing a molten phase of low melting point metal or metal alloy having good electrical conductivity, e.g. by deposition using an electric spray gun.
